# EUROPEAN PATENT APPLICATION

(11) **EP 4 636 102 A1**
(43) Date of publication of application: **22.10.2025**
(21) Application number: 23903966.2
(22) Date of filing: 12.12.2023
(51) Int. Cl.: C22B 26/12, C22B 1/02, C22B 3/04, C22B 3/22

(54) **METHOD FOR RECOVERING LITHIUM**

(30) Priority: 16.12.2022 KR 20220177581
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: JUNG, Eun Jin, Pohang-si, Gyeongsangbuk-do 37834 (KR); KIM, Byung Won, Pohang-si, Gyeongsangbuk-do 37584 (KR); LEE, Go Gi, Pohang-si, Gyeongsangbuk-do 37669 (KR); EOM, Hyung Sub, Pohang-si, Gyeongsangbuk-do 37560 (KR)
(74) Representative: Pfenning, Meinig & Partner mbB
(86) International application number: PCT/KR2023/020450
(87) International publication number: WO 2024/128764

(57) **Abstract**

The method of recovering lithium according to the present invention comprises: a step of physically sorting and crushing waste lithium batteries to obtain a lithium source; heat-treating the lithium source at a temperature of 100 to 1,600°C; water leaching the heat-treated lithium source to separate it into a first lithium source residue and a lithium carbonate solution; recovering lithium carbonate from the lithium carbonate solution; adding a chlorination material to the first lithium source residue and heat-treating it; water leaching the heat-treated first lithium source residue to separate it into a second lithium source residue and a lithium chloride solution; and recovering lithium chloride from the lithium chloride solution.

## Description

### FIELD OF THE INVENTION

The present invention relates to a method of recovering lithium, specifically to a method of preferentially recovering lithium from waste lithium batteries.

### DESCRIPTION OF THE RELATED ART

As the adoption of electric vehicles increases, the number of waste batteries is gradually rising, and it is projected that approximately 80,000 waste lithium-ion batteries (LIBs) will be generated around the year 2030. The potential residual value of resources recovered from waste batteries of domestic electric vehicles is expected to reach approximately 200 billion won.

In response, research on recovering valuable metals from waste batteries is actively being conducted. This involves extracting rare metals such as nickel and cobalt, which were previously entirely dependent on imports, and it is anticipated that this will enable the substitution of imports through the secure acquisition of materials.

Both domestically and internationally, processes utilizing waste batteries for valuable metal recovery are being commercialized based on dry and wet processes by related recovery companies. In the case of dry processes, it is possible to recover metals such as Ni and Co; however, lithium, which is a difficult-to-reduce element, tends to float in the slag, making its recovery challenging. In wet processes, lithium is recovered in the final stage after recovering other elements, which can lead to lithium loss during the recovery of other elements in intermediate processes.

Therefore, there is a demand for the development of a lithium recovery process that can minimize the loss of lithium.

### TECHNICAL PROBLEM

The present invention aims to provide a method of recovering lithium that can suppress the loss of lithium by recovering it in advance through a pre-leaching process.

### TECHNICAL SOLUTION

The present invention provides a method of recovering lithium comprising: heat-treating a lithium source at a temperature of 100 to 1,600°C; water leaching the heat-treated lithium source to separate it into a first lithium source residue and a lithium carbonate solution; recovering lithium carbonate from the lithium carbonate solution; adding a chlorination material to the first lithium source residue and heat-treating it; water leaching the heat-treated first lithium source residue to separate it into a second lithium source residue and a lithium chloride solution; and recovering lithium chloride from the lithium chloride solution.

### ADVANTAGEOUS EFFECTS

The method of recovering lithium according to the present invention has the advantage of minimizing the loss of lithium during the process by pre-leaching the lithium.

### BRIEF DESCRIPTION OF THE DRAWINGS

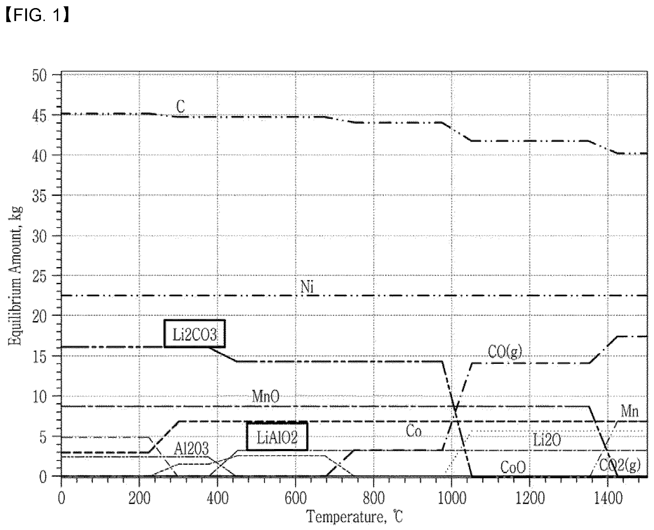

FIG. 1 is a diagram showing the simulation results indicating that lithium compounds such as lithium carbonate and lithium aluminate (LiAlO₂) are produced when the lithium source is heat-treated.

### DETAILED DESCRIPTION OF THE EMBODIMENTS

The following examples illustrate the present invention in more detail. However, these examples are merely exemplary and do not limit the scope of the present invention, which is defined by the claims described below.

In the present invention, when a certain element is described as being located "on" another element, it includes not only the case where the certain element is directly in contact with the other element but also the case where another element is interposed between the two elements.

In the present invention, when a certain part is described as "comprising/including/containing/having" a certain component, it means that it may further include other components unless specifically stated otherwise, rather than excluding other components.

An embodiment of the present invention relates to a method of recovering lithium, comprising: heat-treating a lithium source at a temperature of 100 to 1,600°C; water leaching the heat-treated lithium source to separate it into a first lithium source residue and a lithium carbonate (Li₂CO₃) solution; recovering lithium carbonate from the lithium carbonate solution; adding a chlorination material to the first lithium source residue and heat-treating it; water leaching the heat-treated first lithium source residue to separate it into a second lithium source residue and a lithium chloride (LiCl) solution; and recovering lithium chloride from the lithium chloride solution.

In conventional processes using waste lithium batteries, cathode material scrap, and process scrap to extract lithium, lithium was often extracted at the end of the process, resulting in inevitable lithium loss. Additionally, when extracting lithium from lithium ore, an excessive amount of sulfuric acid was used compared to the amount of lithium contained in the lithium ore, which was undesirable from both environmental and economic perspectives. Furthermore, a pretreatment process for the lithium ore was necessary, which was not ideal from a process standpoint.

The method of recovering lithium according to the present invention minimizes lithium loss by using a dry process with a chlorination method to pre-leach lithium recovered at the end of a conventional process. After recovering lithium, valuable metals contained in the lithium source can be recovered without loss, making it economically advantageous.

### Step of Heat-Treating a Lithium Source

The method of recovering lithium according to the present invention includes a step of heat-treating a lithium source at a temperature of 100 to 1,600°C.

In the present invention, the "lithium source" may refer to waste lithium battery scrap, cathode material scrap, process scrap, lithium ore (such as spodumene), and the like, which contain lithium.

The waste lithium battery scrap, cathode material scrap, process scrap, and lithium ore are terms commonly interpreted in the industry.

The waste lithium battery may include cathode materials, anode materials, electrolytes, and the like.

The lithium ore may be, for example, spodumene (LiAlSi₂O₆), petalite (LiAlSi₄O₁₀), lepidolite (K(Li,Al)₃(Si,Al)₄O₁₀(F,OH)₂), eucryptite (LiAlSiO₄), amblygonite ((Li,Na)AlPO₄(F,OH)), or mixtures thereof, but is not limited thereto.

Specifically, the lithium ore may be spodumene.

The lithium source may include metal oxides composed of various metals.

The various metals may include lithium (Li), nickel (Ni), cobalt (Co), copper (Cu), manganese (Mn), and the like, and the various metals may be composite metals thereof.

The metal oxide may be lithium cobalt oxide (LiCoO₂), lithium nickel cobalt manganese oxide (LiNiCoMnO₂), lithium manganese oxide (LiMnO₂), lithium copper oxide (LiCuO₂), lithium iron phosphate (LiFePO₄), lithium alumina oxide (LiAlO₂), lithium fluoride (LiF), or lithium-containing lithium ore (LiAlSi₂O₆), among other lithium compounds.

In summary, the lithium source may include metal oxides composed of various metals.

The method of recovering lithium according to the present invention may include, if necessary, a step of physically sorting and crushing the lithium source to obtain a powdered form of the lithium source before heat-treating the lithium source, but is not limited thereto. For example, if the lithium source is waste lithium batteries or lithium ore, the waste lithium batteries or lithium ore may be physically sorted and crushed to obtain a powdered form of the lithium source, as needed.

In summary, the lithium source may be in powdered form.

By heat-treating the lithium source, lithium carbonate (Li₂CO₃) is generated. For example, lithium carbonate is generated as the carbon contained in the lithium source reacts with 2LiMeO₂ or lithium compounds. The reaction equation is as follows:

[Reaction Equation] 2LiMeO₂ + 2C → Li₂CO₃ + 2Me + CO

In the reaction equation, Me represents the various metals.

The heat treatment temperature may preferably be 200 to 1,000°C, more preferably 400 to 1,000°C. When the heat treatment temperature is within this range, the reaction efficiency is optimized, which is advantageous.

In one embodiment of the present invention, the step of heat-treating the lithium source may be performed for 10 minutes to 24 hours, preferably 20 minutes to 600 hours, more preferably 20 minutes to 400 minutes.

When the heat treatment time is within this range, the carbon remaining in the lithium source and the lithium are more likely to form compounds, facilitating the generation of lithium carbonate, which is advantageous.

In another embodiment of the present invention, the heat-treating step may be performed in a fluidized bed, vertical furnace, horizontal furnace, or rotary kiln, but is not limited thereto.

In another embodiment of the present invention, in the heat-treating step, a carbon source may be added such that the stoichiometric ratio of Li:C is 1:0.5 or more, preferably 1:0.5 to 1:1.2, more preferably 1:0.5 to 1:1.

When the carbon source is added to the lithium source and heat-treated together, the generation of lithium carbonate is facilitated by the reaction equation, which is advantageous. Specifically, if the lithium source is cathode material scrap, the carbon source may be added to the lithium source and heat-treated together.

The carbon source may be carbon powder, coke, CO gas, or CO₂ gas, but is not limited thereto.

### Separating into First Lithium Source Residue and Lithium Carbonate Solution

The method of recovering lithium according to the present invention includes a step of water leaching the heat-treated lithium source to separate it into a first lithium source residue and a lithium carbonate solution.

Since the lithium carbonate generated through the heat-treating step has a solubility of 1.54g/100ml in water (at 0°C), the generated lithium carbonate is recovered into a solution through water leaching.

The water leaching may be performed using distilled water, and the water leaching time, the amount of distilled water, and the temperature of the distilled water are not limited in the present invention.

By water leaching the heat-treated lithium source, the lithium carbonate generated in the heat-treating step dissolves in water and changes into a solution state, while the first lithium source residue remains in a solid state.

The separation of the first lithium source residue and the lithium carbonate solution may be performed using a filter press, decanter, or the like, but is not limited thereto.

### Recovering Lithium Carbonate

The method of recovering lithium according to the present invention includes a step of recovering lithium carbonate from the lithium carbonate solution.

The lithium carbonate may be recovered by water leaching.

The step of recovering lithium carbonate may further include a step of heating and concentrating or vacuum distilling to facilitate the precipitation of lithium carbonate.

The recovered lithium carbonate may undergo a washing step. Since the solubility of lithium carbonate in water decreases as the water temperature increases, it is preferable to wash it by raising the water temperature to 80 to 90°C.

The lithium carbonate that has undergone the washing step may undergo a drying step.

The drying step may be performed using a dryer or oven, and the drying temperature, drying time, and the like in the drying step are not limited in the present invention.

The method of recovering lithium according to the present invention has the advantage of increasing the lithium recovery rate compared to conventional lithium recovery methods because lithium is pre-leached in the form of lithium carbonate.

### Adding Chlorination Material to First Lithium Source Residue and Heat-Treating

The method of recovering lithium according to the present invention includes a step of adding a chlorination material to the first lithium source residue and heat-treating it.

In another embodiment of the present invention, the chlorination material may be one or more chlorides selected from the group consisting of chlorine gas, CaCl2, FeCl₃, MgCl₂, NaCl, KCI, CuCl₂, AlCl₃, and MnClₓ.

The chlorination material may be added in an amount exceeding the stoichiometric ratio required to produce lithium chloride based on the concentration of Li remaining in the first lithium source residue.

For example, the chlorination material may be included in a ratio of 0.01 to 0.5 moles, preferably 0.05 to 0.4 moles, more preferably 0.1 to 0.4 moles, per mole of Li remaining in the first lithium source residue.

While not wishing to be bound by theory, it is theoretically possible to collect lithium in the lithium source in the form of lithium carbonate, but due to kinetic or reaction driving force issues, there is a limit to collecting all lithium in the lithium source as lithium carbonate, and the remaining lithium remains as compounds such as LiAlO₂.

FIG. 1 shows a simulation result illustrating the production of lithium carbonate and lithium aluminate (LiAlO₂) as lithium compounds when heat-treating the lithium source. Referring to FIG. 1, it can be seen that lithium aluminate remains even though lithium carbonate is generated when heat-treating the lithium source. Since the presence of lithium aluminate acts as a loss in lithium recovery, dissociating the bonds of lithium aluminate is an important factor.

Additionally, when producing lithium directly as lithium chloride from the lithium source, there is a problem of cation elements from the added chlorides being incorporated as much as the generated lithium chloride.

Therefore, in the present invention, after generating lithium carbonate by heat-treating the lithium source, the lithium carbonate is recovered by water leaching, and chlorides are added to the remaining lithium source residue, followed by a chlorination reaction of dry heat treatment to recover the remaining lithium in the form of lithium chloride.

This not only minimizes lithium loss but also has the excellent advantage of minimizing the incorporation of impurities due to additional raw materials, namely chlorides.

In another embodiment of the present invention, the chlorination material may be FeCl₃. Specifically, in the present invention, the chlorination material may be FeCl₃.

FeCl₃ has a relatively low melting point (mp) of 306°C and boiling point (bp) of 315°C compared to other chlorides. For example, CaCl₂ has a melting point of 772°C and a boiling point of 1,935°C, which may limit reactions to high temperatures. Therefore, since lithium chloride can be generated at relatively lower temperatures compared to other chlorides that require high-temperature reactions, it is preferable to use FeCl₃ as the chlorination material.

The heat treatment may be performed at a temperature of 100 to 1,600°C, preferably 200 to 1,000°C, more preferably 400 to 1,000°C.

When the heat treatment temperature is within this range, it is advantageous because the reaction efficiency can be increased.

The heat treatment time may be 10 minutes to 24 hours, preferably 20 minutes to 600 hours, more preferably 30 minutes to 400 minutes.

When the heat treatment time is within this range, the chlorination reaction between the remaining lithium in the first lithium source residue and the chlorination material is promoted, facilitating the generation of lithium chloride, which is advantageous.

The step of heat-treating the first lithium source residue may involve using coke, CO gas, or CO₂ gas.

For example, the coke may be added together when the chlorination material is added to the first lithium source residue.

Additionally, for example, the step of heat-treating the first lithium source residue may be performed under an atmosphere of CO gas or CO₂ gas.

The coke, CO gas, and CO₂ gas may serve to improve the generation rate of lithium chloride. Specifically, the coke, CO gas, and CO₂ gas may serve as reducing agents.

The coke may be included in a molar ratio of 0.5 to 2 moles per mole of residual lithium remaining in the first lithium source residue, but is not limited thereto.

However, when the coke is included within this range, it is preferable because it is less likely to act as an impurity while having an excellent effect of increasing production efficiency.

The coke may have an average particle size of 100 to 400 µm, but is not limited thereto. However, when the coke satisfies the range of average particle size, it is preferable because the phenomenon of coke agglomeration is suppressed, resulting in an excellent effect of increasing production efficiency.

The flow rate of CO gas or CO₂ gas may vary depending on the scale of the reaction heat treatment furnace, so it can be appropriately supplied. For example, the CO gas or CO₂ gas may be supplied at a flow rate of 300 to 1,500 sccm/min, but is not limited thereto. However, when the flow rate of CO gas or CO₂ gas satisfies this range, it is preferable because the improvement in the generation rate of lithium chloride is sufficiently achieved.

The heat treatment of the first lithium source residue may be performed in a fluidized bed, vertical furnace, horizontal furnace, or rotary kiln, but is not limited thereto.

### Separating into Second Lithium Source Residue and Lithium Chloride Solution

The method of recovering lithium according to the present invention includes a step of water leaching the heat-treated first lithium source residue to separate it into a second lithium source residue and a lithium chloride solution.

The heat-treated first lithium source residue is in a state where lithium chloride has been generated, and since lithium chloride has high solubility in water, it is recovered into a solution through water leaching. For example, lithium chloride may have a solubility of 68.29g/100mL at 0°C and 74.48g/100mL at 10°C.

The water leaching may be performed using distilled water, and the water leaching time, the amount of distilled water, and the temperature of the distilled water are not limited in the present invention.

By water leaching the heat-treated first lithium source residue, the lithium chloride generated in the step of heat-treating the first lithium source is dissolved in water and changes into a solution state, while the second lithium source residue remains in a solid state.

The separation of the second lithium source residue and the lithium chloride solution may be performed using a filter press, decanter, or the like, but is not limited thereto.

In another embodiment of the present invention, the steps of adding a chlorination material to the first lithium source residue and heat-treating it; and water leaching the heat-treated first lithium source residue to separate it into a second lithium source residue and a lithium chloride solution; can be performed two or more times.

In summary, after water leaching the heat-treated first lithium source residue to separate it into a second lithium source residue and a lithium chloride solution, the separated second lithium source residue can be re-treated by adding the chlorination material and heat-treating it, followed by water leaching to separate it into a third lithium source residue and a lithium chloride solution. Additionally, the third lithium source residue can be treated by adding the chlorination material and heat-treating it, followed by water leaching to separate it into a fourth lithium source residue and a lithium chloride solution.

As described above, when the steps of adding a chlorination material to the first lithium source residue and heat-treating it; and separating into a second lithium source residue and a lithium chloride solution are performed two or more times, it is preferable because the lithium recovery rate can be further increased.

The method of recovering lithium according to the present invention has the advantage of minimizing lithium loss because it includes the step of separating into a second lithium source residue and a lithium chloride solution, allowing for the recovery of remaining lithium that was not recovered as lithium carbonate.

### Recovering Lithium Chloride

The method of recovering lithium according to the present invention includes a step of recovering lithium chloride from the lithium chloride solution.

The recovery of lithium chloride can be classified into solid-phase collection, liquid-phase collection, or gas-phase collection depending on the process temperature.

In another embodiment of the present invention, the step of recovering lithium chloride may be performed through a selective chlorination system.

For example, lithium chloride solution can be collected in the gas phase at a temperature of 1,400°C or higher, and in this case, a gas-phase lithium chloride collection zone can be formed at the top, and it can be condensed in a condenser to be collected in the solid phase or collected in the liquid phase through top water leaching, but is not limited thereto.

### Recovering Valuable Metals

The method of recovering lithium according to the present invention may further include a step of recovering a valuable metal from the second lithium source residue.

The step of recovering a valuable metal is not limited in the present invention.

For example, the second lithium source residue from which lithium chloride has been separated can be leached into a solution through sulfuric acid leaching, followed by an impurity purification process, allowing for the recovery of Cu, Mn, Co, and Ni in that order through a conventional solvent extraction method, but is not limited thereto.

The method of recovering lithium according to the present invention is designed to pre-extract lithium in a process for recovering valuable metals from a lithium source such as waste lithium battery scrap, cathode material scrap, process scrap, or lithium ore (spodumene). Specifically, by pre-recovering lithium compounds as lithium carbonate and then recovering the remaining lithium as lithium chloride, the process loss of lithium can be minimized. Additionally, compared to conventional wet process systems using sulfuric acid, the process is simplified because lithium compounds can be efficiently recovered from ore without pretreatment. Other valuable metals such as Ni, Co, Cu, and Mn can be recovered after pre-recovering lithium.

The following examples illustrate the present invention in more detail. However, the following examples are merely preferred embodiments of the present invention and are not intended to limit the scope of the present invention to these examples.

### Example

A waste lithium battery was physically sorted and crushed using a crusher to obtain a powdered lithium source.

The lithium source was heat-treated at a temperature of 600°C for 6 hours, and the heat-treated lithium source was subsequently leached with distilled water and filtered using a filter press to separate it into a first lithium source residue and a lithium carbonate solution. The separated lithium carbonate solution was leached to recover lithium carbonate.

FeCl₃ was added to the first lithium source residue, which was separated from the lithium carbonate solution, and it was heat-treated at a temperature of 600°C for 6 hours. The heat-treated first lithium source residue was leached with distilled water and filtered using a filter press to separate it into a second lithium source residue and a lithium chloride solution. The separated lithium chloride solution was leached using a selective chlorination system at 1,400°C to recover lithium chloride, and this was repeated a total of three times. During each repetition, the amount of FeCl₃ added (based on the concentration of residual lithium in each residue) was varied, as shown in Table 1 below.

The lithium recovery rate according to the lithium compounds recovered at each step is shown in Table 1.

The lithium recovery rate was calculated through the analysis of lithium concentrations in the lithium carbonate solution and the lithium chloride solution.

**(Table 1)**

| Form of lithium recovery compound | Li₂CO₃ | LiCl | LiCl | LiCl | Final recovery rate (%) |
|---|---|---|---|---|---|
| Reaction time (h) | 6 | | | | - |
| Reaction temperature (°C) | 600 | | | | - |
| Amount of FeCl₃ added (% by weight) | - | 17 | 5 | 2 | - |
| Lithium recovery rate (%) | 82.48 | 16.76 | 0.58 | 0.01 | 99.83 |

Based on Table 1, it can be understood that it is possible to recover more than 99% of the total lithium content in waste lithium. In the case of undergoing the method of recovering as LiCl once, a recovery of 99.2% was possible, and when the method of recovering LiCl was repeated two more times, a recovery of 99.83% was achievable.

The present invention is not limited to the above embodiments but can be manufactured in various forms. Those skilled in the art to which the present invention pertains will understand that it can be embodied in other specific forms without changing the technical spirit or essential characteristics of the present invention. Therefore, the embodiments described above should be understood as illustrative in all aspects and not restrictive.

## Claims

1. A method of recovering lithium comprising:
heat-treating a lithium source at a temperature of 100 to 1,600°C;
water leaching the heat-treated lithium source to separate it into a first lithium source residue and a lithium carbonate solution;
recovering a lithium carbonate from the lithium carbonate solution;
adding a chlorination material to the first lithium source residue and heat-treating it;
water leaching the heat-treated first lithium source residue to separate it into a second lithium source residue and a lithium chloride solution; and
recovering a lithium chloride from the lithium chloride solution.

2. The method of recovering lithium according to claim 1,
wherein the chlorination material is one or more chlorides selected from the group consisting of chlorine gas, CaCl₂, FeCl₃, MgCl₂, NaCl, KCI, CuCl₂, AlCl₃ and MnClₓ.

3. The method of recovering lithium according to claim 2,
wherein the chlorination material is FeCl₃.

4. The method of recovering lithium according to claim 1,
wherein in the heat-treating step, a carbon source is added such that the stoichiometric ratio of Li:C is 1:0.5 or more.

5. The method of recovering lithium according to claim 1,
wherein the steps of adding a chlorination material to the first lithium source residue and heat-treating it; and water leaching the heat-treated first lithium source residue to separate it into a second lithium source residue and a lithium chloride solution; are performed two or more times.

6. The method of recovering lithium according to claim 1, further comprising:
recovering a valuable metal from the second lithium source residue.

7. The method of recovering lithium according to claim 1,
wherein the step of heat-treating the lithium source is performed for 10 minutes to 24 hours.

8. The method of recovering lithium according to claim 1,
wherein the heat-treating step is performed in a fluidized bed, vertical furnace, horizontal furnace, or rotary kiln.

9. The method of recovering lithium according to claim 1,
wherein the step of recovering lithium chloride is performed through a selective chlorination system.
